# DEMANDE DE BREVET EUROPEEN

(11) **EP 3 734 532 A1**
(43) Date de publication de la demande: **04.11.2020**
(21) Numéro de dépôt: 20171190.0
(22) Date de dépôt: 23.04.2020
(51) Int. Cl.: G06Q 20/32, G06Q 20/40, G06Q 20/20, G06Q 20/36

(54) **PROCÉDÉ DE RÉALISATION D`UNE TRANSACTION**

(30) Priorité: 29.04.2019 FR 1904501
(71) Demandeur: Idemia Identity & Security France, 92400 Courbevoie (FR)
(72) Inventeur: ADJAZ, Aghiles, 92400 Courbevoie (FR); BOUATOU, Vincent, 92400 Courbevoie (FR)
(74) Mandataire: Lavialle, Bruno François Stéphane

(57) **Abrégé**

L'invention concerne un procédé de réalisation d'une transaction entre un acheteur équipé d'un dispositif à circuit intégré mobile de télécommunication et un vendeur équipé d'une unité informatique ayant accès à une mémoire contenant des informations personnelles de l'acheteur, les informations personnelles comprenant un moyen de paiement électronique et un identifiant du dispositif à circuit intégré.

## Description

La présente invention concerne le domaine du commerce et plus particulièrement un procédé de réalisation d'une transaction entre un acheteur équipé d'un dispositif à circuit intégré tel qu'un terminal mobile de télécommunication et un vendeur équipé d'une unité informatique.

### ARRIERE PLAN DE L'INVENTION

Il est connu d'utiliser comme moyen de paiement une carte bancaire se présentant sous la forme d'un corps en matière plastique équipé d'une puce électronique contenant des données d'identification du possesseur de la carte et un code confidentiel théoriquement connu de lui seul. La carte bancaire permet notamment d'effectuer des achats dans des magasins ou auprès de commerçants pourvus d'un terminal de paiement électronique (TPE), ou sur le réseau Internet auprès de commerçants mettant en œuvre des moyens de paiement en ligne.

Pour réaliser un paiement en magasin, l'acheteur doit généralement insérer sa carte bancaire dans le terminal de paiement électronique du commerçant puis saisir son code confidentiel sur un clavier du terminal de paiement pour autoriser le paiement. Cette opération est relativement longue.

Pour limiter cet inconvénient, il est prévu que les transactions de faible montant puissent être autorisées simplement en établissant une liaison sans contact avec la carte, sans intervention du possesseur de cette dernière. Cependant, toute personne entrée en possession de la carte, que ce soit de manière légitime ou non, est alors en mesure d'effectuer de telles transactions puisqu'aucune authentification du possesseur de la carte n'est réalisée.

Il est également courant que l'acheteur se soit volontairement enrôlé à un programme de fidélité proposé par le commerçant pour offrir à l'acheteur divers avantages, offres spéciales et autres réductions récompensant sa fidélité. Pour s'inscrire au programme de fidélité, il suffit à l'acheteur de retirer auprès du commerçant une carte de fidélité qui comprend généralement un code barre que l'acheteur devra scanner à chacun de ses achats chez le commerçant. La mise en place du programme de fidélité est également l'occasion pour le commerçant de constituer une base de données contenant des informations sur le comportement de ses clients, notamment leurs habitudes d'achats, les montants ou bien encore les fréquences des achats, et permettant de réaliser une segmentation fine de la clientèle pour proposer aux clients des opérations personnalisées de marketing direct.

Néanmoins, il en résulte que l'acheteur doit avoir sur lui sa carte bancaire et sa carte de fidélité pour pouvoir payer ses achats et bénéficier des avantages du programme de fidélité, ce qui rend encore plus contraignante l'opération de paiement.

### OBJET DE L'INVENTION

L'invention a donc pour but de proposer un procédé de réalisation d'une transaction entre un acheteur et un vendeur permettant d'obvier au moins en partie aux problèmes précités.

### RESUME DE L'INVENTION

A cet effet, l'invention propose un procédé de réalisation d'une transaction entre un acheteur équipé d'un dispositif à circuit intégré et un vendeur équipé d'une unité informatique ayant accès à une mémoire contenant des informations personnelles de l'acheteur, les informations personnelles comprenant un moyen de paiement électronique et un identifiant du dispositif à circuit intégré.

Selon l'invention, le procédé comprend les étapes suivantes :
- lors d'une phase initiale de transaction,
   a) détection, par l'unité informatique, du dispositif à circuit intégré à proximité de ladite unité informatique ;
   b) envoi par l'unité informatique au dispositif à circuit intégré d'un identifiant de ladite unité informatique ;
   c) vérification par le dispositif à circuit intégré de l'identifiant de l'unité informatique et, s'il est reconnu, envoi, à l'unité informatique par le dispositif à circuit intégré, d'un message représentatif d'au moins une donnée biométrique de référence de l'acheteur et de l'identifiant dudit dispositif à circuit intégré ;
   d) stockage, par l'unité informatique, du message représentatif de la donnée biométrique de référence et de l'identifiant du dispositif à circuit intégré dans une mémoire accessible par ladite unité informatique ;
- lors d'une phase finale de transaction,
   e) identification de l'acheteur présent devant l'unité informatique via une reconnaissance biométrique réalisée à partir du message représentatif de la donnée biométrique de référence stocké et d'une acquisition biométrique de l'acheteur réalisée par l'unité informatique ;
   f) soumission à l'acheteur par l'unité informatique d'une offre de transaction et validation par l'acheteur de l'offre de transaction via l'unité informatique ;
   g) gestion automatique par l'unité informatique du paiement de la transaction de l'acheteur en utilisant le moyen de paiement électronique contenu dans la mémoire ;
   h) suppression du message représentatif de la donnée biométrique de référence stocké par ladite unité informatique.

Par « message représentatif de la donnée biométrique de référence », on entend une ligne de caractères constituée par :
- la ou les donnée(s) biométrique(s) de référence en elle(s)-même(s), ou
- la ou les donnée(s) biométrique(s) de référence juxtaposée(s) à une ou plusieurs autres données, ou
- une ou plusieurs données qui ont été formées à partir de la ou les donnée(s) biométrique(s) de référence, juxtaposée(s) ou pas à une ou plusieurs autres données.

La phase initiale de transaction est par exemple réalisée à l'entrée du magasin et la phase finale de transaction est effectuée lorsque l'acheteur est prêt à quitter le magasin. Ainsi, l'acheteur n'a pas besoin de sortir un quelconque moyen de paiement ni même une carte de fidélité pour effectuer la transaction : il doit simplement être porteur du dispositif à circuit intégré. Seule une reconnaissance biométrique de l'acheteur par l'unité informatique suffit pour réaliser la transaction. Par ailleurs, la phase initiale de transaction permet à l'unité informatique d'être informée de l'arrivée de l'acheteur et d'en garder une trace quand bien même l'acheteur n'effectuerait aucun achat.

Selon une caractéristique particulière, les échanges entre l'unité informatique et le dispositif à circuit intégré sont chiffrés.

Ceci est particulièrement intéressant car on évite ainsi que les données échangées entre le dispositif à circuit intégré et l'unité informatique ne soient interceptée par un fraudeur.

Selon un premier mode de mise en œuvre, le message représentatif de la donnée biométrique de référence est un message obtenu après application d'une méthode de type « Secure Sketch » sur la donnée biométrique de référence et une clé.

La donnée biométrique de référence n'est donc pas transmise en elle-même : elle a simplement été combinée à la clé pour former le message SSK qui est représentatif de la donnée biométrique de référence et de la clé.

Avantageusement, une version hachée de la clé est transmise avec le message représentatif de la donnée biométrique et la reconnaissance biométrique comprend l'étape de comparer la version hachée transmise à une version hachée d'une clé retrouvée à partir du message représentatif de la donnée biométrique, et de l'acquisition biométrique.

Selon un deuxième mode de mise en œuvre, le message représentatif de la donnée biométrique de référence est formé par la donnée biométrique de référence.

Selon une autre caractéristique particulière, la connexion et les échanges entre l'unité informatique et le dispositif à circuit intégré sont réalisés par liaison sans fil en champ proche de type « Bluetooth Low Energy ».

Selon une autre caractéristique particulière, les informations personnelles sont enregistrées dans la mémoire accessible par l'unité informatique via un programme informatique préalablement installé sur le dispositif à circuit intégré.

Selon une autre caractéristique particulière, le procédé comprend à la suite de l'étape h) les étapes suivantes :
i) connexion de l'unité informatique au dispositif à circuit intégré et envoi par l'unité informatique de l'identifiant de celle-ci et de la transaction au dispositif à circuit intégré ;
j) ajout de la transaction à un historique de transaction stocké sur le dispositif à circuit intégré.

De manière particulière, le dispositif à circuit intégré est un terminal mobile de télécommunication.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
[Fig. 1] la figure 1 représente schématiquement un procédé de réalisation d'une transaction selon un mode de réalisation particulier de l'invention ;
[Fig. 2] la figure 2 représente une variante du procédé illustré à la figure 1.

### DESCRIPTION DETAILLEE DE L'INVENTION

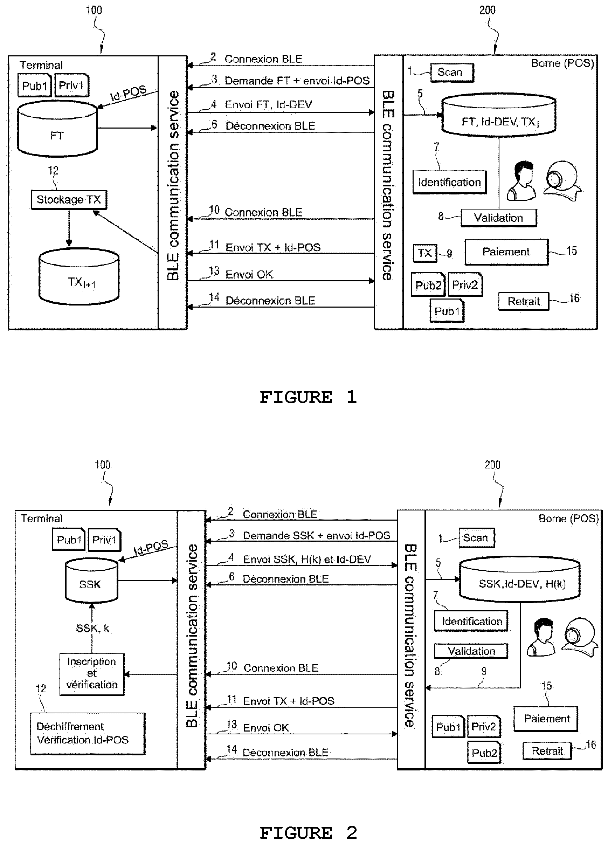

En référence à la figure 1, le procédé de l'invention est ici décrit en relation avec un mode de mise en œuvre particulier pour la réalisation d'une transaction TX entre un acheteur équipé d'un dispositif à circuit intégré, ici un terminal 100 mobile de télécommunication de type smartphone, et un magasin équipé d'une borne interactive de commande appelée aussi « Point of Sale » (POS).

De façon connue en soi, le terminal 100 comprend au moins une caméra et une mémoire de stockage reliées à un circuit électronique de traitement. Le circuit électronique de traitement est agencé pour exécuter des programmes informatiques comme un programme d'exploitation (ou système d'exploitation également appelé couramment OS) et des applications permettant notamment de commander la caméra du terminal 100 pour enregistrer dans la mémoire du terminal 100 des images fournies par ladite caméra. Par ailleurs, le terminal 100 est équipé de moyens de communication sans fil (indiqués « BLE communication service » sur la figure 1) utilisant ici la technologie « Bluetooth Low Energy » (BLE) pour permettre un échange bidirectionnel de données avec la borne POS (cette technologie est avantageuse car elle ne nécessite pas un appariement préalable du terminal 100 et de la borne POS). Le terminal 100 comprend également une application de chiffrement de données mettant en œuvre une clé privée Priv1, utilisée exclusivement par le terminal 100, et une clé publique Pub1 qui est destinée à être transmise aux destinataires des données chiffrées.

La borne POS comprend un dispositif de prise de vues, tel qu'une caméra, relié à une unité informatique de traitement 200 (ou unité informatique) agencée pour exécuter un programme de reconnaissance biométrique de visages capable de détecter, dans une image de visage fournie par la caméra, des données biométriques dont des points caractéristiques sémantiquement définis de ce visage. Les points caractéristiques sémantiquement définis comprennent par exemple : le coin de la bouche droit, le coin de la bouche gauche, le coin extérieur de l'œil gauche, le coin intérieur de l'œil gauche, le coin extérieur de l'œil droit, le coin intérieur de l'œil droit, le bout du nez. Le programme de reconnaissance biométrique est connu en lui-même et utilise par exemple un algorithme de type SIFT (de l'anglais « scale-invariant feature transform ») ou SURF (de l'anglais « speeded up robust features »).

La borne POS comprend par ailleurs une interface utilisateur comportant un écran tactile qui permet à l'acheteur d'interagir avec l'unité informatique de traitement 200, une imprimante reliée à l'unité informatique de traitement 200 et des moyens de communication sans fil (indiqués « BLE communication service » sur la figure 1) de type « Bluetooth Low Energy » pour permettre à l'unité de traitement d'échanger des informations avec le terminal 100. L'unité informatique de traitement 200 est ici reliée via un réseau de type Ethernet, Intranet ou Internet à un serveur informatique central permettant à ladite unité informatique de traitement 200 d'accéder à distance au serveur informatique central dont la mémoire contient une base de données contenant des informations personnelles sur des consommateurs du magasin.

Lors d'une phase préalable à la transaction TX (ou phase d'enrôlement), l'acheteur télécharge et installe sur son terminal 100 une application permettant à l'acheteur de s'inscrire volontairement à un programme de fidélité proposé par le magasin. L'application contient un identifiant Id-POS de l'unité informatique de traitement 200 de la borne POS et une clé publique Pub2. En lançant l'application, l'acheteur connecte son terminal 100 au serveur informatique central du magasin et est invité à :
- créer un espace client sur le serveur informatique central du magasin en saisissant par exemple une adresse de courriel et un mot de passe permettant de sécuriser l'accès audit espace client,
- remplir un formulaire concernant des informations personnelles, et
- réaliser via la caméra du terminal 100 un autoportrait photographique dont sont extraites des données biométriques de référence FT.

Les informations personnelles comprennent la clé publique Pub1, des données de paiement électronique, comme par exemple un relevé d'identité bancaire (RIB) ou les numéros d'une carte de paiement, et des données d'identification, notamment un nom, un prénom, un sexe, un âge, une adresse postale... L'ensemble de ces informations sont chiffrées en utilisant la clé Pub2 avant d'être transmises au serveur informatique central qui les déchiffrera au moyen de la clé privé Priv2. Contrairement aux données biométriques (ou « template biométrique ») de référence FT, les informations personnelles et un identifiant Id-DEV du terminal 100 sont envoyés et stockés, via l'application, sur le serveur informatique central. Les données biométriques de référence FT sont uniquement stockées dans la mémoire du terminal 100. La bonne réception des informations personnelles par le serveur informatique central clôture l'inscription de l'acheteur au programme de fidélité.

Par la suite, lorsque l'acheteur entre dans le magasin et passe à proximité de la borne POS, le terminal 100 de l'acheteur est détecté par l'unité informatique de traitement 200 qui scanne en permanence la bande de fréquences BLE pour détecter les terminaux mobiles de communications à sa portée (étape 1). L'unité informatique de traitement 200 se connecte (étape 2) alors en « Bluetooth Low Energy » au terminal 100 pour lui envoyer (étape 3) l'identifiant Id-POS de l'unité informatique de traitement 200 et lui demander de lui envoyer en retour les données biométriques de référence FT de l'acheteur. Le terminal 100 compare ensuite l'identifiant envoyé par l'unité informatique de traitement 200 à celui contenu dans l'application installée sur le terminal 100. Si l'identifiant Id-POS de l'unité informatique de traitement 200 n'est pas reconnu par le terminal 100, ce dernier ignore la demande de l'unité informatique de traitement 200. Dans le cas contraire, le terminal 100 envoie (étape 4) en « Bluetooth Low Energy », sans aucune intervention de l'acheteur, les données biométriques de référence FT et l'identifiant Id-DEV du terminal 100 à l'unité informatique de traitement200 qui les enregistre (étape 5) dans une mémoire locale de l'unité informatique de traitement 200 pour une durée maximum prédéterminée. On prévoira avantageusement que le terminal 100 envoie dans un premier temps son identifiant Id-DEV et dans un deuxième temps les données biométriques de référence FT après que celles-ci ont été chiffrées au moyen de la clé privée Priv1. A partir de l'identifiant Id-DEV, l'unité informatique de traitement 200 peut retrouver la clé publique Pub1 pour déchiffrer les données biométriques de référence FT. Une fois l'enregistrement des données biométriques de référence FT et l'identifiant Id-DEV du terminal 100 effectué, l'unité informatique de traitement 200 se déconnecte du terminal 100 (étape 6).

L'identifiant Id-DEV du terminal 100 étant associé aux informations personnelles de l'acheteur stockées sur le serveur informatique central, il est possible pour le magasin de déterminer quasiment en direct la présence et l'identité de l'acheteur dans le magasin équipé de la borne POS. L'unité informatique de traitement 200 pourra alors par exemple commander un enregistrement, par exemple sur le serveur informatique central, de la date et de l'heure de la détection du terminal 100, ce qui permettra au magasin de mieux connaître le comportement de l'acheteur. A l'inverse, le serveur informatique central pourra requérir que l'unité informatique de traitement 200 accomplisse des actions concernant ledit acheteur comme par exemple, lui faire passer un message sonore ou visuel. Le serveur informatique central pourra également faire parvenir directement au terminal 100, par exemple via un SMS, des informations, un code promotionnel ou autre.

Lorsque l'acheteur s'apprête à quitter le magasin et se présente devant la borne POS, le terminal 100 est détecté et l'unité informatique de traitement 200 de la borne POS commande la capture d'une image du visage de l'acheteur par le dispositif de prise de vues et en extrait des données biométriques pour les comparer aux données biométriques de référence FT stockées dans la mémoire locale de l'unité informatique de traitement 200. L'extraction des données biométriques est effectuée au moyen d'un procédé d'extraction connu en lui-même et ne sera pas plus détaillé ici.

L'identification (étape 7) de l'acheteur par l'unité informatique de traitement 200 est validée lorsque les données biométriques extraites correspondent aux données biométriques de référence FT. Ce mode d'identification mis en œuvre par un algorithme de reconnaissance biométrique dit de « matching » est connu en lui-même et ne sera pas plus détaillé ici.

L'unité informatique de traitement 200 de la borne POS vérifie ensuite dans la base de données disponible sur le serveur si un historique TXᵢ de transactions existe pour l'acheteur et lui propose le cas échéant l'achat de biens et/ou de services apparaissant dans l'historique TXᵢ de transactions. Dans le cas contraire, l'unité informatique de traitement 200 se contente de proposer à l'acheteur l'achat de biens et/ou de services proposés par le magasin tout en affichant certaines informations personnelles de l'acheteur comme par exemple son nom et son prénom.

Après que l'acheteur a sélectionné les biens et/ou services qu'il souhaite acheter, via l'interface tactile de l'unité informatique de traitement 200, l'unité informatique de traitement 200 invite l'acheteur à valider (étape 8) sa sélection.

L'unité informatique de traitement 200 se connecte alors (étape 10) de nouveau en « Bluetooth Low Energy » au terminal 100 et lui envoie (étape 11) une offre de transaction comprenant un résumé de la transaction TX (dont son montant, la date et l'heure par exemple) accompagnée du numéro d'identifiant Id-POS de l'unité informatique de traitement 200 de la borne POS. L'offre de transaction TX est alors validée (ou pas) par l'acheteur et dans l'affirmative enregistrée (étape 12) dans le terminal 100 qui envoie (étape 13) en retour le choix de l'acheteur. Avantageusement, le résumé de la transaction TX et le numéro d'identifiant Id-POS de l'unité informatique de traitement 200 de la borne 200 sont chiffrés au moyen de la clé publique Pub1 avant leur transmission. Le terminal 100 déchiffre ceux-ci au moyen de sa clé privée Priv1. Le retour du terminal 100 est lui aussi chiffré par la clé Priv1 avant l'envoi. Le retour constitue, pour le commerçant, une preuve que l'acheteur a bien autorisé la transaction et est donc conservé par le commerçant. Une fois l'enregistrement effectué, la borne 200 se déconnecte (étape 14) du terminal 100.

L'unité informatique de traitement 200 de la borne POS procède alors automatiquement au paiement (étape 15) de la sélection de l'acheteur en utilisant les moyens de paiement électronique dudit acheteur qui sont accessibles à l'unité informatique de traitement 200 de la borne POS via le serveur informatique central ou, sur requête de l'unité informatique de traitement 200, le serveur informatique central effectue le paiement et, éventuellement, informe en retour l'unité informatique de traitement 200 que le paiement a bien été effectué.

Dès lors, à aucun moment l'acheteur n'a eu besoin de sortir un quelconque moyen de paiement ni même une carte de fidélité pour effectuer la transaction TX. L'acheteur n'a eu qu'à se présenter devant la borne 200 et se laisser photographier par le dispositif de prise de vues. Une fois le paiement finalisé, la transaction TX est ajoutée à l'historique TXᵢ de transactions de l'acheteur présent sur le serveur informatique central et l'unité informatique de traitement 200 de la borne POS commande l'impression d'un ticket de transaction que l'acheteur est invité à récupérer.

L'unité informatique de traitement 200 lance un retrait (étape 16) de la sélection de l'acheteur. Les données biométriques de référence FT sont effacées simultanément de la mémoire locale de l'unité informatique de traitement 200 de la borne POS.

On notera que le chiffrement des échanges entre le terminal 100 et l'unité informatique de traitement 200 est particulièrement intéressant puisqu'il permet d'éviter toute récupération de données biométriques de référence FT et autres informations personnelles permettant une authentification frauduleuse.

La figure 2 illustre une variante de mise en œuvre de l'invention qui ne diffère du procédé illustré à la figure 1, qu'en ce que les données biométriques de référence FT ne sont pas transmises en elles-mêmes par le terminal 100 à l'unité informatique de traitement 200 pour éviter toute récupération des données biométriques de référence FT qui pourraient servir à une authentification frauduleuse. La méthode ici utilisée pour former le message représentatif des données biométriques de référence est de type « Secure Sketch » tel que décrit dans le document « Protecting Biometric Templates with Sketch: Theory and Practice », Y. Sutcu et al., IEEE Transactions on Information Forensics and Security, Vol. 2, N°3, September 2007. Une telle méthode est par exemple mise en œuvre dans le document EP-A-3 280 089. Le terminal 100 génère aléatoirement une clé k qui va être combinée aux données biométriques de référence pour élaborer un message SSK (dit aussi « helper data ») qui sera transmis à la borne 200 en lieu et place des données biométriques de référence FT. La méthode Secure Sketch est ainsi faite qu'elle ne permet pas de retrouver les données biométriques. Comme la clé k est générée de manière aléatoire, elle est différente à chaque demande d'authentification et le message SSK est différent à chaque authentification.

Dans cette variante, comme précédemment, l'unité informatique de traitement 200 détecte le terminal 100 (étape 1), s'y connecte (étape 2) et lui envoie l'identifiant Id-POS et une demande de message SSK (étape 3) et le terminal 100 vérifie que cet identifiant lui est connu.

Le cas échéant, le terminal 100 génère aléatoirement la clé k et élabore le message SSK. Le terminal 100 transmet ensuite à l'unité informatique de traitement 200 le message SSK, l'identifiant Id-DEV et une version hachée (« hash ») de la clé k H(k) (étape 4).

Le message SSK, l'identifiant Id-DEV et la version hachée H(k) sont enregistrées par l'unité informatique de traitement 200 (étape 5) qui se déconnecte du terminal 100 (étape 6).

Lorsque l'acheteur s'apprête à quitter le magasin et se présente devant la borne POS, après que le terminal 100 a été détecté et que l'unité informatique de traitement 200 a commandé la capture d'une image du visage de l'acheteur et en a extrait des données biométriques, l'unité informatique de traitement 200 applique la méthode Secure Sketch en combinant les données biométriques extraites avec le message SSK reçu pour retrouver une clé k'. L'unité informatique de traitement 200 calcule ensuite une version hachée de la clé k', soit H(k'), et la compare à la version hachée H(k) : si H(k') est égal à H(k), l'acheteur est considéré comme identifié par la borne 200 (étape 7).

L'unité informatique de traitement de la borne 200 propose à l'acheteur l'achat de biens et/ou de services fournis par le magasin tout en affichant certaines informations personnelles de l'acheteur comme par exemple son nom et son prénom.

Après que l'acheteur a sélectionné les biens et/ou services qu'il souhaite acheter, via l'interface tactile de l'unité informatique de traitement 200, l'unité informatique de traitement 200 invite l'acheteur à valider (étape 8) sa sélection.

L'unité informatique de traitement 200 se connecte alors (étape 10) de nouveau en « Bluetooth Low Energy » au terminal 100 et lui envoie (étape 11) un résumé de la transaction TX accompagnée de la clé k' trouvée et du numéro d'identifiant Id-POS de la borne 200. Le terminal 100 vérifie que la clé k' trouvée qui lui a été envoyée est bien identique à la clé k utilisée pour former le message SSK et, dans l'affirmative, la transaction TX est alors sélectivement enregistrée (étape 12) par l'acheteur dans le terminal 100 qui envoie (étape 13) en retour le choix d'enregistrement de l'acheteur à l'unité informatique de traitement 200. Le reste de la transaction (étapes 14 à 16) se déroule comme précédemment.

Avantageusement, et comme précédemment, les données transmises par le terminal 100 seront chiffrées au moyen de sa clé privé Priv1 et déchiffrées par l'unité informatique de traitement 200 de la borne POS au moyen de la clé publique Pub1 qui lui aura été communiquée préalablement ; et les données transmises par l'unité informatique de traitement 200 de la borne POS seront chiffrées au moyen de la clé publique Pub1 de l'acheteur et déchiffrées par le terminal 100 au moyen de la clé privée Priv1.

Bien entendu, l'invention n'est pas limitée aux modes de réalisation décrits mais englobe toute variante entrant dans le champ de l'invention telle que définie par les revendications.

Bien qu'ici l'unité informatique de traitement 200 de la borne POS enregistre l'autoportrait photographique de référence FT et l'identifiant Id-DEV du terminal 100 dans une mémoire locale, elle peut aussi les enregistrer sur le serveur informatique central ou dans un espace de stockage à distance de type « cloud ».

Avantageusement, la borne POS est agencée à une entrée du magasin afin de favoriser la détection de toute personne inscrite au programme de fidélité qui entre dans le magasin.

L'échange d'informations entre le terminal 100 et l'unité informatique de traitement 200 de la borne POS peut être réalisé par toute liaison sans fil autre qu'une liaison « Bluetooth Low Energy», en champ proche ou non, comme par exemple par une liaison de type « Wi-Fi ».

Bien que la reconnaissance biométrique soit ici réalisée à partir d'une photo du visage de l'acheteur, elle peut aussi être réalisée à partir d'autres données biométriques comme une empreinte de doigt, un iris, une voix...

Bien qu'ici le dispositif à circuit intégré soit un téléphone mobile, le dispositif à circuit intégré peut être autre et par exemple une carte à circuit intégré. Dans ce cas, les opérations initiales d'enrôlement sont de préférence réalisées au moyen d'une unité informatique de traitement telle qu'un ordinateur relié à un lecteur de carte à circuit intégré que l'ordinateur soit l'ordinateur personnel de l'acheteur ou un ordinateur mis à disposition par le magasin.

La mémoire accessible par l'unité informatique de traitement peut être une mémoire incorporée à l'unité informatique ou une mémoire à laquelle l'unité informatique de traitement est reliée par un réseau. L'unité informatique de traitement peut jouer le rôle de serveur central ou le serveur central peut être commun à plusieurs bornes 200 voire à plusieurs magasins.

## Revendications

1. Procédé de réalisation d'une transaction entre un acheteur équipé d'un dispositif à circuit intégré (100) et un vendeur équipé d'une unité informatique (200) ayant accès à une mémoire contenant des informations personnelles de l'acheteur, les informations personnelles comprenant un moyen de paiement électronique et un identifiant (Id-DEV) du dispositif à circuit intégré, **caractérisé en ce que** le procédé comprend les étapes suivantes :
- lors d'une phase initiale de transaction,
a) détection par l'unité informatique du dispositif à circuit intégré à proximité de ladite unité informatique ;
b) envoi par l'unité informatique au dispositif à circuit intégré d'un identifiant (Id-POS) de ladite unité informatique ;
c) vérification par le dispositif à circuit intégré de l'identifiant de l'unité informatique et, s'il est reconnu, envoi, à l'unité informatique par le dispositif à circuit intégré, d'un message représentatif d'au moins une donnée biométrique de référence (FT) de l'acheteur et de l'identifiant (Id-DEV) dudit dispositif à circuit intégré ;
d) stockage par l'unité informatique du message représentatif de la donnée biométrique de référence (FT) et de l'identifiant (Id-DEV) du dispositif à circuit intégré ;
- lors d'une phase finale de transaction,
e) identification de l'acheteur présent devant l'unité informatique via une reconnaissance biométrique réalisée à partir du message représentatif de la donnée biométrique de référence (FT) stocké et d'une acquisition biométrique de l'acheteur réalisée par l'unité informatique ;
f) soumission à l'acheteur par l'unité informatique d'une proposition de transaction (TX) et validation par l'acheteur de la proposition de transaction (TX) via l'unité informatique ;
g) gestion automatique par l'unité informatique du paiement de la transaction de l'acheteur en utilisant le moyen de paiement électronique contenu dans la mémoire ;
h) suppression du message représentatif de la donnée biométrique de référence (FT) par ladite unité informatique.

2. Procédé selon la revendication 1, dans lequel les échanges entre l'unité informatique (200) et le dispositif à circuit intégré (100) sont chiffrés.

3. Procédé selon la revendication 1 ou 2, dans lequel le message représentatif de la donnée biométrique de référence (FT) est un message (SSK) obtenu après application d'une méthode de type « Secure Sketch » sur la donnée biométrique de référence (FT) et une clé (k).

4. Procédé selon la revendication 3, dans lequel une version hachée (H(k)) de la clé (k) est transmise avec le message représentatif de la donnée biométrique de référence (FT) et la reconnaissance biométrique comprend l'étape de comparer la version hachée transmise à une version hachée (H(k')) d'une clé (k') retrouvée à partir du message (SSK) et de l'acquisition biométrique de l'acheteur.

5. Procédé selon la revendication 1 ou 2, dans lequel le message représentatif de la donnée biométrique de référence (FT) est formé par la donnée biométrique de référence (FT).

6. Procédé selon l'une quelconque des revendications précédentes, dans lequel la connexion et les échanges entre l'unité informatique (200) et le dispositif à circuit intégré (100) sont réalisés par une liaison « Bluetooth Low Energy » (BLE).

7. Procédé selon l'une quelconque des revendications précédentes, dans lequel les informations personnelles sont enregistrées dans la mémoire accessible par l'unité informatique (200) via un programme informatique préalablement installé sur le dispositif à circuit intégré.

8. Procédé selon l'une quelconque des revendications précédentes, comprenant à la suite de l'étape h) les étapes suivantes :
i) connexion de l'unité informatique (200) au dispositif à circuit intégré (100) et envoi par l'unité informatique de l'identifiant (Id-POS) de celle-ci et de la transaction (TX) au dispositif à circuit intégré ;
j) ajout de la transaction (TX) à un historique de transaction stocké sur le dispositif à circuit intégré.

9. Procédé selon l'une quelconque des revendications précédentes, dans lequel le dispositif à circuit intégré (100) est un terminal mobile de télécommunication.
